# EUROPÄISCHE PATENTSCHRIFT

(11) **EP 3 848 579 B1**
(45) Veröffentlichungstag und Bekanntmachung des Hinweises auf die Patenterteilung: **02.08.2023**
(21) Anmeldenummer: 20151555.8
(22) Anmeldetag: 13.01.2020
(51) Int. Cl.: F04B 13/00, F04B 49/06

(54) **SYSTEM UND VERFAHREN ZUR DOSIERUNG EINES FLÜSSIGEN ODER GASFÖRMIGEN MEDIUMS**
SYSTEM AND METHOD FOR METERING A LIQUID OR GASEOUS MEDIUM
SYSTÈME ET PROCÉDÉ DE DOSAGE D'UN MEDIUM LIQUIDE OU GAZEUX

(43) Veröffentlichungstag der Anmeldung: 14.07.2021
(73) Patentinhaber: Promix Solutions AG, 8406 Winterthur (CH)
(72) Erfinder: Schlummer, Christian, 8400 Winterthur (CH)
(74) Vertreter: Herrmann, Johanna

(56) Entgegenhaltungen:
- EP-A1- 0 486 957
- DE-A1- 19 613 142
- DE-A1-102012 009 193

## Beschreibung

### Hintergrund

Die vorliegende Erfindung betrifft ein System sowie ein Verfahren zur Dosierung eines flüssigen oder gasförmigen Mediums. Bei den flüssigen oder gasförmigen Medien handelt es sich insbesondere um niederviskose Fluide oder Gase, wie zum Beispiel Butan, Pentan, COz, Ethanol, Methanol, Stickstoff, Argon.

### Stand der Technik

In herkömmlichen Dosieranlagen für niederviskose Flüssigkeiten wird häufig eine Pumpe eingesetzt, die nach dem Verdrängungsprinzip betrieben wird, beispielsweise eine Kolbenpumpe oder eine Membranpumpe. Das Dosiervolumen, also die Fördermenge pro Kolbenhub, hängt von der Pumpendrehzahl und vom Volumen der Kolbenkammer oder der Membrankammer ab. Zum Betrieb dieser Pumpen werden Steuerungsventile benötigt, zum Beispiel Rückschlagventile, die sicherstellen, dass das Medium angesaugt resp. gefördert wird. Diese Pumpen haben einen begrenzten Durchsatzbereich, der durch die maximale Pumpendrehzahl und das Volumen der Kolben- oder Membrankammer begrenzt ist. Wenn mit einer Kolben- oder Membranpumpe nur geringe Dosiervolumina gefördert werden sollen, das heisst, dass sich die Fördermenge im unteren Dosierbereich befindet, ist das Dosiervolumen im Vergleich zum Volumen der Kolbenkammer sehr klein. Im unteren Dosierbereich kann somit die Fördermenge nicht mehr exakt geregelt werden, da die Kolben oder Membranen im Verhältnis zum Dosiervolumen sehr gross sind. Im unteren Dosierbereich wird daher eine pulsierende Strömung erzeugt. Zudem sind derartige Dosieranlagen bedingt durch die Steuerventile anfällig auf Störungen.

Für die Dosierung von niederviskosen Flüssigkeiten und Gasen können auch Nadelventile eingesetzt werden, mittels welchen eine Dosiermenge in Abhängigkeit von der Nadelposition eingestellt werden kann, beispielsweise gemäss EP 0 486 957 A1. Im geschlossenen Regelkreis kann unter Verwendung eines Massendurchflusssensors eine definierte Dosiermenge über eine einstellbare Drosselfunktion geregelt werden. Bei solchen Nadelventilen ist die Dosiermenge neben der Nadelposition im Ventilsitz auch von der Druckdifferenz über das Dosierventil abhängig, sodass Dosiermengenschwankungen auftreten können, sofern der Druck stromaufwärts des Nadelventils oder stromabwärts des Nadelventils nicht konstant ist. Bei dieser Druckdifferenz handelt es sich somit um die Druckdifferenz zwischen dem Vordruck (p1) und dem Dosierdruck (p2). Darüber hinaus ist die einstellbare Dosiermenge auch bei gegebener Druckdifferenz aufgrund der Nadelposition sehr eingeschränkt variierbar, sodass ein Nadelventil häufig nur einem maximalen Dosiermengenbereich zum Einsatz kommt, der im Bereich von 1:10 bis 1:20 liegt. Für einen Dosiermengenbereich von 1:10 entspricht die minimale Dosiermenge somit 1/10 der maximalen Dosiermenge. Für einen Dosiermengenbereich von 1:20 entspricht die minimale Dosiermenge somit 1/20 der maximalen Dosiermenge. Bei grossen Druckdifferenzen führen kleine geforderte Dosiermengen zu pulsierendem Dosierverhalten. Bei kleinen Druckdifferenzen sind keine grossen Dosiermengen mehr einstellbar, da selbst bei vollständig angehobener Nadel die Druckdifferenz nicht ausreicht, um die Dosiermenge exakt einzustellen. Insofern lassen sich mit vorbekannten Dosiervorrichtungen nur sehr eingeschränkte Dosiermengenbereiche abdecken.

### Aufgabe der Erfindung

Der Erfindung liegt die Aufgabe zu Grunde, ein System sowie ein Verfahren zur Dosierung eines flüssigen oder gasförmigen Mediums zu schaffen, die ein grosses Dosierspektrum d.h. einen grossen Dosiermengenbereich abdeckt und konstant und zuverlässig unabhängig von der Druckdifferenz zwischen dem Vordruck (p1) und dem Dosierdruck (p2) über das Ventil fördert.

### Beschreibung der Erfindung

Die Lösung der Aufgabe der Erfindung erfolgt durch ein System zur Dosierung eines flüssigen oder gasförmigen Mediums gemäss Anspruch 1 sowie mittels eines Verfahrens gemäss Anspruch 12. Das System und das Verfahren finden bevorzugt Verwendung für die Dosierung von COz gemäss Anspruch 15. Vorteilhafte Ausführungsbeispiele des Systems sind Gegenstand der Ansprüche 2 bis 11. Vorteilhafte Verfahrensvarianten sind Gegenstand der Ansprüche 13, 14.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe System sowie das Verfahren. Die Beschreibung eines bestimmten Systems ist nur als beispielhaft anzusehen. In der Beschreibung und den Ansprüchen werden die Begriffe "enthalten", "umfassen", "aufweisen" als "enthalten, aber nicht beschränkt auf" interpretiert.

Ein System zur Dosierung eines flüssigen oder gasförmigen Mediums in einen durch einen geschlossenen Kanal fliessenden Fluidstrom, der einen Prozessdruck aufweist, umfasst einen Zulauf für ein flüssiges oder gasförmiges Medium. Der Zulauf steht mit dem geschlossenen Kanal in fluidleitender Verbindung. Im Zulauf sind ein Druckregelventil und ein Durchflusssensor angeordnet. Das Druckregelventil und der Durchflusssensor bilden einen geschlossenen Regelkreis aus. Mittels des Durchflusssensors ist ein Durchflussmesswert ermittelbar. Der Durchflussmesswert ist als Eingangsgrösse in einen Regler einspeisbar. Im geschlossenen Regelkreis ist der Eingangsgrösse mittels des Reglers eine Ausgangsgrösse zuordenbar, wobei die Ausgangsgrösse einem gewünschten Dosierdruck entspricht. Der gewünschte Dosierdruck ist durch das Druckregelventil einstellbar, wobei die Dosiermenge durch die Druckdifferenz zwischen dem Dosierdruck (p2) und dem Prozessdruck (p3) festgelegt ist. Somit wird die Dosiermenge im erfindungsgemässen System ausschliesslich über die Einstellung des Dosierdrucks (p2) geregelt. Der Prozessdruck (p3) ist hierbei konstant oder wird durch ein vorgeschaltetes Ventil auf einen konstanten Wert eingestellt.

Gemäss einem Ausführungsbeispiel ist der Durchflusssensor als Massenstromsensor ausgebildet. Gemäss einem Ausführungsbeispiel ist der Regler als Massenstromregler ausgebildet. Gemäss einem Ausführungsbeispiel können der Durchflusssensor und der Massenstromregler eine Einheit bilden.

Insbesondere kann der Durchflusssensor stromaufwärts des Druckregelventils im Zulauf angeordnet sein. Gemäss einem Ausführungsbeispiel ist stromaufwärts des Durchflusssensors ein Druckbegrenzungsventil angeordnet. Mittels dieses Druckbegrenzungsventils können Druckschwankungen, die durch den Verdichter verursacht werden, auf einen konstanten Wert reduziert werden. Der Verdichter kann diskontinuierlich einen Druckspeicher auffüllen.

Gemäss einem Ausführungsbeispiel ist das Druckregelventil als ein elektromagnetisches Ventil ausgebildet. Das Druckregelventil kann somit den Dosierdruck aufgrund eines analogen Eingangssignals regeln. Das analoge Eingangssignal kann beispielsweise eine elektrische Spannung umfassen. Insbesondere kann die elektrische Spannung bis zu 10 V betragen. Der Bereich von 0 bis 10 V kann beispielsweise einem Druckbereich von 0 bis 400 bar entsprechen. Das heisst, ein Eingangssignal von beispielsweise 10 V entspricht einem Dosierdruck von 400 bar. Die Korrelation zwischen dem Spannungswert des Eingangssignals und dem zugehörigen Dosierdruck kann insbesondere linear sein, beispielsweise entspricht ein Eingangssignal von 1 V einem Dosierdruck von 40 bar, ein Eingangssignal von 2 V einem Dosierdruck von 80 bar usw. Das Eingangssignal kann vom Massenstromregler ermittelt werden.

Alternativ kann das Eingangssignal eine elektrische Stromstärke im Bereich von beispielsweise 0 bis einschliesslich 20 mA umfassen, insbesondere im Bereich von 4 bis einschliesslich 20 mA liegen.

Alternativ kann eine digitale Ansteuerung mit einem diskreten Signal vorgesehen werden, beispielsweise über ein BUS System.

Der Massenstromregler enthält eine Prozessoreinheit, mittels welcher aus dem vom Durchflusssensor übermittelten Durchflussmesswert das zugehörige Eingangssignal ermittelt werden kann.

Gemäss einem Ausführungsbeispiel beträgt der Dosiermengenbereich zwischen der kleinsten und der grössten Dosiermenge mindestens 1:50. Insbesondere kann der Dosiermengenbereich zwischen der kleinsten und der grössten Dosiermenge mindestens 1:100 betragen. Insbesondere kann der Dosiermengenbereich zwischen der kleinsten und der grössten Dosiermenge mindestens 1:500 betragen. Insbesondere kann der Dosiermengenbereich zwischen der kleinsten und der grössten Dosiermenge mindestens 1:1000 betragen.

Gemäss einem Ausführungsbeispiel wird ein auf die Anströmseite des Druckregelventils wirkender Vordruck mittels eines Verdichters erzeugt. Ein Verdichter kommt vorteilhafterweise zum Einsatz, wenn das Medium gasförmig ist. Der Verdichter kann als Kompressor ausgebildet sein. Gemäss einem Ausführungsbeispiel wird ein auf die Anströmseite des Druckregelventils wirkender Vordruck mittels einer Pumpe erzeugt. Eine Pumpe kann zur Förderung eines flüssigen Mediums vorgesehen sein.

Gemäss einem Ausführungsbeispiel ist zwischen dem Durchflusssensor und dem Druckregelventil ein erstes Druckmessgerät zur Messung des auf der Eingangsseite des Druckregelventils anliegenden Vordrucks ausgebildet.

Gemäss einem Ausführungsbeispiel ist stromabwärts des Druckregelventils ein zweites Druckmessgerät zur Messung des Dosierdrucks im Zulauf angeordnet.

Gemäss einem Ausführungsbeispiel ist zwischen dem Druckregelventil und der Mündungsöffnung des Zulaufs in den geschlossenen Kanal des Fluidstroms ein Vordruckregler angeordnet.

Gemäss einem Ausführungsbeispiel ist stromaufwärts des Durchflusssensors ein Druckspeicher angeordnet.

Gemäss einem Ausführungsbeispiel ist der Regler als PID-Regler ausgebildet.

Ein Verfahren zur Dosierung eines flüssigen oder gasförmigen Mediums in einen durch einen geschlossenen Kanal fliessenden Fluidstrom, der einen Prozessdruck aufweist, umfasst die Zuführung des flüssigen oder gasförmigen Mediums mittels eines Zulaufs in den geschlossenen Kanal. Im Zulauf sind ein Druckregelventil und ein Durchflusssensor angeordnet. Durch das Druckregelventil und den Durchflusssensor wird ein geschlossener Regelkreis ausgebildet. Mittels des Durchflusssensors wird ein Durchflussmesswert ermittelt, der Durchflussmesswert wird als Eingangsgrösse in einen Regler eingespeist, wobei der Eingangsgrösse durch den Regler eine Ausgangsgrösse zugeordnet wird, wobei die Ausgangsgrösse einem gewünschten Dosierdruck entspricht. Der gewünschte Dosierdruck wird durch das Druckregelventil eingestellt, wobei die Dosiermenge durch die Druckdifferenz zwischen dem Dosierdruck und dem Prozessdruck eingestellt wird.

Insbesondere wird bei einer Änderung der Dosiermenge ein neuer Istwert für die Dosiermenge innerhalb von weniger als 60 Sekunden erreicht.

Insbesondere weicht der Istwert der Dosiermenge nicht mehr als 30% vom Sollwert der Dosiermenge ab, wenn der Sollwert für den Dosierdruck verändert wird.

Das System sowie das Verfahren nach einem der vorhergehenden Ausführungsbeispiele kann beispielsweise zur Regelung der Dosiermenge von COz verwendet werden.

Das Druckregelventil stellt hierbei den für die Dosierung der exakten Dosiermenge erforderlichen Dosierdruck ein, wobei sich durch die Druckdifferenz zwischen dem Dosierdruck und dem Prozessdruck die resultierende Dosiermenge ergibt. Bei gegebenem Prozessdruck, der beispielsweise durch einen Fluidstrom vorgegeben ist, in welchen das zu dosierende flüssige oder gasförmige Medium eingebracht werden soll, muss der Dosierdruck immer höher sein als der Prozessdruck, damit das flüssige oder gasförmige Medium fliesst und in den Fluidstrom eintreten kann. Die Dosiermenge ist von der Druckdifferenz zwischen dem Dosierdruck und dem Prozessdruck abhängig. Diesen Zusammenhang kann man sich für die Mengenregelung zunutze machen: der Dosierdruck wird solange erhöht, bis die geforderte Dosiermenge erreicht ist. Ist die gemessene Dosiermenge grösser als der Sollwert, wird der Dosierdruck reduziert. Ist die Dosiermenge zu klein, wird der Dosierdruck mittels des Druckregelventils entsprechend erhöht. Somit ergibt sich eine Regelung der Dosiermenge basierend auf einer Druckregelung bei gegebenem Prozessdruck. Arbeitet der Regler schnell genug, können die geforderten Dosiermengen präzise und ein einem sehr weiten Bereich eingestellt werden. Da der Dosierdruck weitgehend unempfindlich gegen Vordruckschwankungen, z.B. von einem Kompressor, ist, bleibt die Dosiermenge auch bei Schwankungen der Druckdifferenz konstant. Beim Durchflusssensor handelt es sich vorzugsweise um einen Massenstromsensor, da dieser im Gegensatz zu volumetrischen Durchflusssensoren unabhängig von der Temperatur des Mediums ist.

Es hat sich gezeigt, dass mit einem druckgeregelten System sowohl sehr kleine als auch sehr grosse Dosiermengen mit demselben Druckregelventil dosiert werden können. Es lassen sich Dosiermengenbereiche von bis zu 1:1000 reproduzierbar einstellen, d.h. mithilfe der Druckregelung können dem Fluidstrom Dosiermengen von 10g/h bis 10.000g/h des flüssigen oder gasförmigen Mediums zugeführt werden. Die Dosiermenge ist zudem sehr genau einstellbar, die Zeit zwischen dem Einstellen eines neuen Dosierdrucks und dem Erreichen desselben sehr kurz. Zudem ist kein signifikantes Überschwingen und Unterschwingen bei der Veränderung der Dosiermenge feststellbar, was für den Dosiervorgang sehr wichtig sein kann.

Ein Vorteil des erfindungsgemässen Systems sowie des zugehörigen Verfahrens ist darin zu sehen, dass bei einer Erhöhung der Durchflussmenge die effektiv geförderten Dosiermenge nicht mehr als 30% über der eingestellten Dosiermenge liegt. Gemäss einem Ausführungsbeispiel kann bei einer Erhöhung der Durchflussmenge die effektiv geförderte Dosiermenge nicht mehr als 20% über der eingestellten Dosiermenge liegen. Gemäss einem Ausführungsbeispiel kann bei einer Erhöhung der Durchflussmenge die effektiv geförderte Dosiermenge nicht mehr als 10% über der eingestellten Dosiermenge liegen.

### Kurzbeschreibung der Zeichnungen

Nachfolgend wird das erfindungsgemässe System anhand einiger Ausführungsbeispiele dargestellt. Es zeigen
Fig. 1 ein Schema eines ersten Ausführungsbeispiels eines erfindungsgemässen Systems,
Fig. 2 ein Schema eines zweiten Ausführungsbeispiels eines erfindungsgemässen Systems,
Fig. 3 ein Beispiel für einen Vergleich der Soll- und Istwerte der Dosiermengen für verschiedene Dosiermengen für ein System gemäss Fig. 1 oder Fig. 2,
Fig. 4 eine graphische Darstellung der Abhängigkeit der Dosiermenge von der Druckdifferenz p1-p2 für ein vorbekanntes Nadelventil,
Fig. 5 ein Beispiel für einen Vergleich der Soll- und Istwerte der Dosiermengen für verschiedene Dosiermengen für ein System gemäss weiteren Ausführungsbeispielen.

### Detaillierte Beschreibung der Zeichnungen

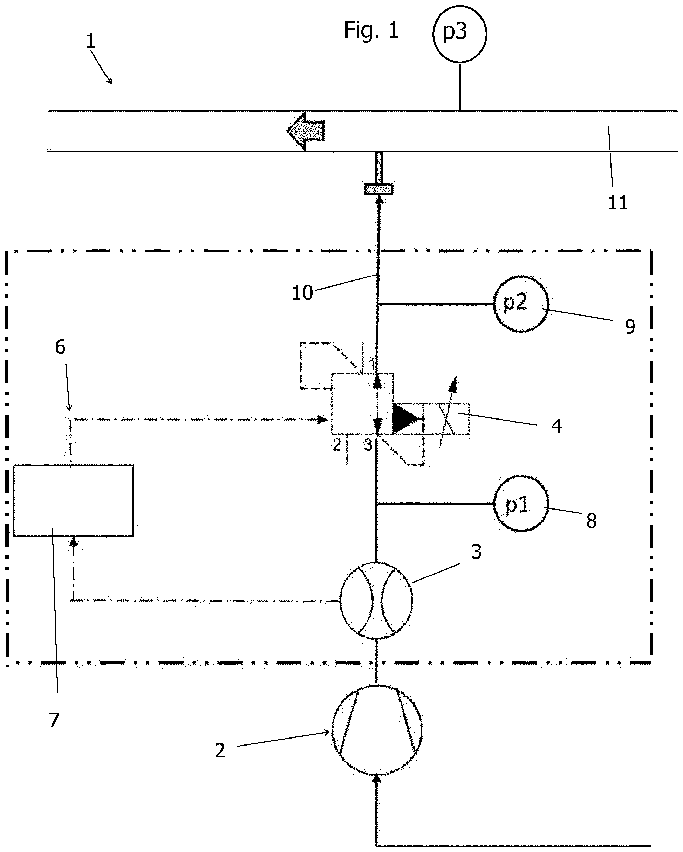

Fig. 1 zeigt ein System 1 zur Dosierung eines flüssigen oder gasförmigen Mediums in einen durch einen geschlossenen Kanal 11 fliessenden Fluidstrom, der einen Prozessdruck p3 aufweist. Das System umfasst einen Zulauf 10 für das flüssige oder gasförmige Medium, wobei der Zulauf 10 mit dem geschlossenen Kanal 11 in fluidleitender Verbindung steht. Im Zulauf 10 sind ein Druckregelventil 4 und ein Durchflusssensor 3 angeordnet, wobei das Druckregelventil 4 und der Durchflusssensor 3 einen geschlossenen Regelkreis 6 ausbilden. Das Druckregelventil 4 kann beispielsweise als ein elektromagnetisches Ventil ausgebildet sein. Mittels des Durchflusssensors 3 ist ein Durchflussmesswert ermittelbar, wobei der Durchflussmesswert als Eingangsgrösse in einen Regler 7 einspeisbar ist. Dieser Eingangsgrösse kann durch den Regler 7 eine Ausgangsgrösse zugeordnet werden, wobei die Ausgangsgrösse einem gewünschten Dosierdruck p2 entspricht. Der gewünschte Dosierdruck p2 ist durch das Druckregelventil 4 einstellbar, wobei die Dosiermenge durch die Druckdifferenz zwischen dem Dosierdruck p2 und dem Prozessdruck p3 festgelegt ist.

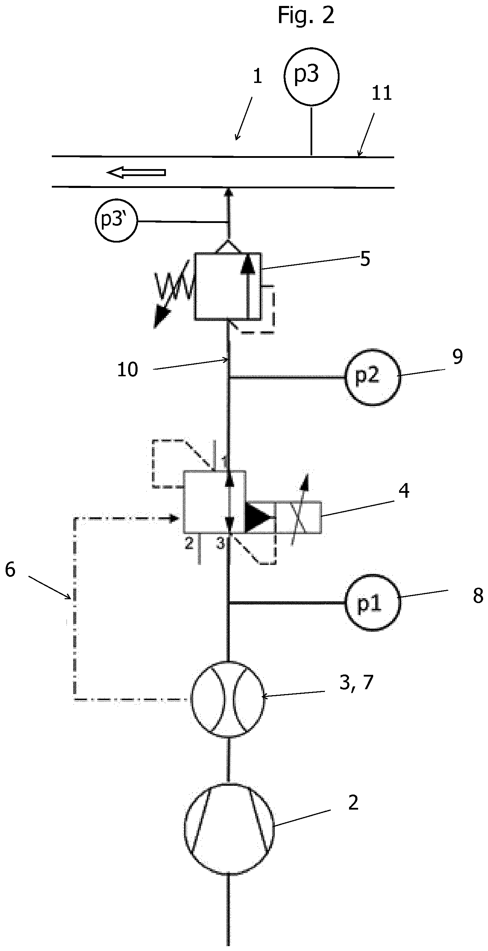

Gemäss einem Ausführungsbeispiel ist der Durchflusssensor 3 als Massenstromsensor und/oder der Regler 7 als Massenstromregler ausgebildet. Insbesondere können der Durchflusssensor 3 und der Regler 7 eine Einheit bilden, was in Fig. 2 dargestellt ist. Der Regler 7 kann beispielsweise als PID-Regler ausgebildet sein.

Der Durchflusssensor 3 ist stromaufwärts des Druckregelventils 4 im Zulauf 10 angeordnet. Zwischen dem Durchflusssensor 3 und dem Druckregelventil 4 ist gemäss Fig. 1 ein erstes Druckmessgerät 8 angeordnet. Dieses erste Druckmessgerät 8 erfasst einen Vordruck p1. Das erste Druckmessgerät 8 ist somit zur Messung des auf der Eingangsseite oder Anströmseite des Druckregelventils 4 anliegenden Vordrucks p1 ausgebildet. Der auf die Anströmseite des Druckregelventils 4 wirkende Vordruck p1 ist gemäss Fig. 1 mittels eines Verdichters 2 erzeugbar. Ein genügend hoher Vordruck p1 ist erforderlich, um einen Fluss des gasförmigen oder flüssigen Mediums durch den Zulauf 10 in Richtung des im geschlossenen Kanal 11 strömenden Fluidstroms zu ermöglichen.

Stromabwärts des Druckregelventils 4 kann ein zweites Druckmessgerät 9 zur Messung des Dosierdrucks p2 im Zulauf 10 angeordnet sein, wie in Fig. 1 gezeigt ist.

Fig. 2 zeigt ein System 1 zur Dosierung eines flüssigen oder gasförmigen Mediums in einen durch einen geschlossenen Kanal 11 fliessenden Fluidstrom gemäss eines zweiten Ausführungsbeispiels. Gleiche oder gleichwirkende Elemente tragen dieselben Bezugszeichen wie in Fig. 1 und es soll hierfür auf die Beschreibung zu Fig. 1 verwiesen werden. Das System 1 gemäss Fig. 2 unterscheidet sich vom System 1 gemäss Fig. 1 dahingehend, dass der Durchflusssensor 3 und der Regler 7 als eine Einheit ausgebildet sind. Der Durchflusssensor 3 misst die Menge des flüssigen oder gasförmigen Mediums, welches vom Verdichter 2 in Richtung des geschlossenen Kanals 11 durch den Zulauf 10 strömt. Der geschlossene Regelkreis 6 zur Regelung der Dosiermenge umfasst den Durchflusssensor 3, den Regler 7 sowie das Druckegelventil 4. Wie im System gemäss Fig. 1 wird vom Regler 7 ein Sollwert für den Dosierdruck p2 ermittelt. Der Sollwert für den Dosierdruck p2 kann beispielsweise in ein analoges Spannungssignal umgewandelt werden. Das Spannungssignal wird über eine Signalleitung, die Bestandteil des geschlossenen Regelkreises 6 sein kann, dem Druckregelventil 4 zugeführt. Wenn das Druckregelventil 4 als elektromagnetisches Ventil ausgebildet ist, kann das Druckregelventil 4 mittels des Spannungssignals auf den Dosierdruck p2 eingestellt werden.

Wie im vorherigen Ausführungsbeispiel gilt, dass der im geschlossenen Kanal 11 strömende Fluidstrom einen Prozessdruck p3 aufweist.

Wenn allerdings dieser Prozessdruck p3 Schwankungen unterliegt, ändert sich die Druckdifferenz p2-p3, wodurch sich die Dosiermenge ändert. Bei geringerer Druckdifferenz p2-p3 wird dem Fluidstrom eine geringere Dosiermenge zugeführt, bei grösserer Druckdifferenz p2-p3 eine entsprechend grössere Dosiermenge. Damit sich Schwankungen des Prozessdrucks p3 nicht auf die Dosiermenge auswirken, kann ein Vordruckregler 5 vorgesehen werden. Fig. 2 zeigt, dass der Vordruckregler 5 zwischen dem Druckregelventil 4 und der Mündungsöffnung des Zulaufs 10 in den geschlossenen Kanal 11 des Fluidstroms angeordnet ist. Mittels des Vordruckreglers 5 kann ein simulierter Prozessdruck p3' eingestellt werden, sodass die Dosiermenge durch die Druckdifferenz p2-p3' festgelegt wird.

Gemäss eines nicht dargestellten Ausführungsbeispiels ist stromaufwärts des Durchflusssensors 3 ein Druckspeicher angeordnet.

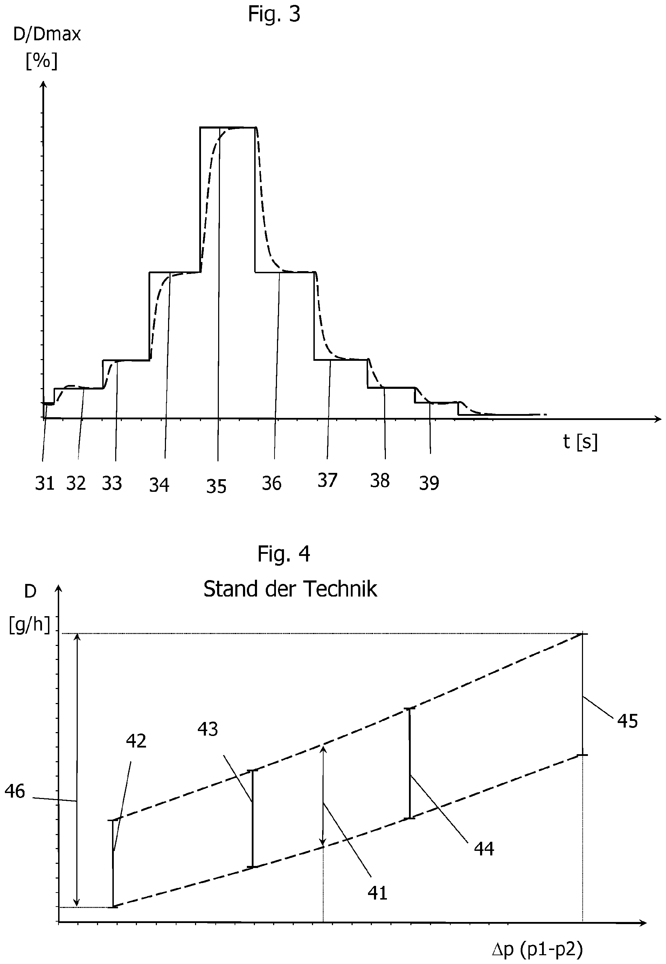

Fig. 3 zeigt ein Beispiel für einen Vergleich der Soll- und Istwerte der Dosiermengen für verschiedene Dosiermengen für ein System 1 gemäss Fig. 1 oder Fig. 2, in welchem das nachstehend beschriebene Verfahren durchgeführt werden kann.

Ein Verfahren zur Dosierung eines flüssigen oder gasförmigen Mediums in einen durch einen geschlossenen Kanal 11 fliessenden Fluidstrom, der einen Prozessdruck p3 aufweist, umfasst beispielsweise ein System 1 gemäss einem der in Fig. 1 oder Fig. 2 gezeigten Ausführungsbeispiele. Das flüssige oder gasförmige Medium wird mittels eines Zulaufs 10 in den geschlossenen Kanal 11 zugeführt. Im geschlossenen Kanal 11 liegt der Prozessdruck p3 an. Im Zulauf 10 sind ein Druckregelventil 4 und ein Durchflusssensor 3 angeordnet, wobei durch das Druckregelventil 4 und den Durchflusssensor 3 ein geschlossener Regelkreis 6 ausgebildet wird. Mittels des Durchflusssensors 3 wird ein Durchflussmesswert ermittelt. Der Durchflussmesswert wird als Eingangsgrösse in einen Regler 7 eingespeist, wobei der Eingangsgrösse durch den Regler 7 eine Ausgangsgrösse zugeordnet wird, wobei die Ausgangsgrösse einem gewünschten Dosierdruck p2 entspricht. Der gewünschte Dosierdruck p2 wird durch das Druckregelventil 4 eingestellt, wobei die Dosiermenge durch die Druckdifferenz zwischen dem Dosierdruck p2 und dem Prozessdruck p3 eingestellt wird.

Bei einer Änderung der Dosiermenge wird ein neuer Sollwert für den Dosierdruck innerhalb von weniger als 60 Sekunden erreicht, was in Fig. 3 für ein Ausführungsbeispiel gezeigt ist.

Die tatsächliche Dosiermenge weicht nicht mehr als 30% vom Sollwert für die Dosiermenge ab, wenn der Sollwert für den Dosierdruck verändert wird, beispielsweise wenn der Sollwert erhöht oder verringert wird.

In dem in Fig. 3 gezeigten Beispiel wird mittels dem vorgängig beschriebenen Verfahren COz in einen Fluidstrom dosiert. Der Vordruck p1 beträgt in diesem Beispiel 200 bar, der Prozessdruck p3 beträgt 170 bar. Fig. 3 zeigt den zeitlichen Verlauf der Sollmenge im Vergleich zur Istmenge für verschiedene Dosiermengen. Die Sollmenge ist mit einer durchgezogenen Linie dargestellt, die Istmenge mit einer gestrichelten Linie. Auf der Abszisse des in Fig. 3 dargestellten Diagramms ist somit die Zeit aufgetragen, auf der Ordinate die relative Dosiermenge als Prozentsatz der maximal möglichen Dosiermenge. Die maximal mögliche Dosiermenge gemäss diesem Beispiel entspricht 2000 g/h oder 100%.

Folgende Dosiermengen wurden in Fig. 3 eingestellt: (31) 100g/h, (32) 200g/h, (33) 400g/h, (34) 1000g/h, (35) 2000g/h, (36) 1000g/h, (37) 400g/h, (38) 100g/h, (39) 20g/h. Jede der Dosiermengen wurde für eine Zeitdauer von weniger als einer Minute eingestellt, indem ein der jeweiligen Dosiermenge entsprechender Dosierdruck p2 vom Regler 7 als ein dem Druck entsprechendes Spannungssignal an das Druckregelventil 4 übermittelt wird.

Fig. 3 zeigt, dass eine Abweichung der Sollmenge von der Istmenge nur innerhalb von maximal 30 Sekunden auftritt, danach entspricht die Sollmenge exakt der Istmenge. Die initiale Abweichung zwischen Sollmenge und Istmenge ist für grosse Dosiermengen im Wesentlichen gleich wie für kleine Dosiermengen. Daher eignet sich das System sowie das zugehörige Verfahren sowohl für kleine als auch für grosse Dosiermengen. Insbesondere ist das System bei stark abweichenden Dosiermengen oder Dosiermengenschwankungen zuverlässig einsetzbar.

Fig. 4 ist eine graphische Darstellung der Veränderung des zulässigen Dosiermengenbereichs 41 bei Änderung der Druckdifferenz Δp zwischen dem Vordruck (p1) und dem Dosierdruck (p2) für ein vorbekanntes Nadelventil. Die Dosiermenge D ist auf der Ordinate aufgetragen, der Druckdifferenz Δp (p1 - p2) auf der Abszisse. Wenn sich der Druckdifferenz Δp (p1 - p2) ändert, ändert sich somit der zulässige Dosiermengenbereich. In Fig. 4 sind vier zulässige Dosiermengenbereiche 42, 43, 44, 45 bei vier unterschiedlichen Differenzdrücken Δp1, Δp2, Δp3, Δp4) exemplarisch dargestellt. Der für ein Nadelventil maximal mögliche Dosiermengenbereich 46 ist auf der Ordinate aufgetragen und ergibt sich als Differenzbetrag der maximalen Dosiermenge und der minimalen Dosiermenge.

Bei derartigen Nadelventilen ist somit die Dosiermenge von der Druckdifferenz zwischen dem Vordruck (p1) und dem Dosierdruck (p2) und der Nadelposition abhängig. Insbesondere ist die Lage des zulässigen Dosiermengenbereichs von der Druckdifferenz zwischen dem Vordruck (p1) und dem Dosierdruck (p2) und der Nadelposition abhängig. Da der Nadelsitz konstruktiv bedingt nur einen begrenzten Änderungsbereich der Nadelposition zulässt, ist der bei einer bestimmten Druckdifferenz erzielbare zulässige Dosiermengenbereich kleiner als der maximale Dosiermengenbereich. Um den maximalen Dosiermengenbereich 46 eines Nadelventils zu nutzen, muss somit auch die Druckdifferenz zwischen dem Vordruck (p1) und dem Dosierdruck (p2) verändert werden, um den zulässigen Dosiermengenbereich 46 zu verschieben.

Schwankungen des Vordrucks (p1) oder des Dosierdrucks (p2) bei konstanter Nadelposition führen aus diesem Grund zu Änderungen der Dosiermenge.

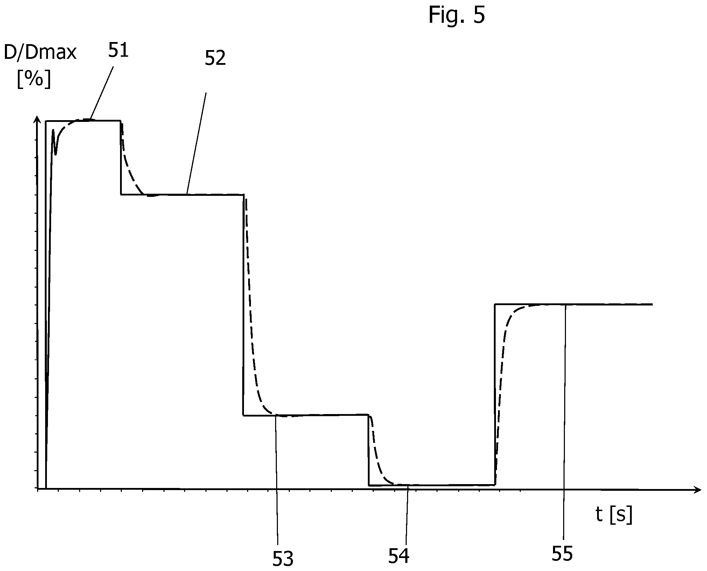

In dem in Fig. 5 gezeigten Beispiel wird mittels dem vorgängig beschriebenen Verfahren eines der genannten Fluide in einen Fluidstrom dosiert. Der Vordruck p1 beträgt in diesem Beispiel 100 bar, der Prozessdruck p3 beträgt 40 bar. Fig. 5 zeigt den zeitlichen Verlauf der Sollmenge im Vergleich zur Istmenge für verschiedene Dosiermengen. Die Sollmenge ist mit einer durchgezogenen Linie dargestellt, die Istmenge mit einer gestrichelten Linie. Auf der Abszisse des in Fig. 5 dargestellten Diagramms ist somit die Zeit aufgetragen, auf der Ordinate die relative Dosiermenge als Prozentsatz der maximal möglichen Dosiermenge. Die maximal mögliche Dosiermenge gemäss dieses Beispiels entspricht 5000 g/h oder 100%.

Folgende Dosiermengen wurden in Fig. 5 eingestellt: (51) 5000g/h, (52) 4000g/h, (53) 1000g/h, (54) 50g/h, (55) und 2500g/h. Jede der Dosiermengen wurde für eine Zeitdauer von weniger als zwei Minuten eingestellt, indem ein der jeweiligen Dosiermenge entsprechender Dosierdruck p2 vom Regler 7 als ein dem Druck entsprechendes Spannungssignal an das Druckregelventil 4 übermittelt wird.

Fig. 5 zeigt auch für dieses Ausführungsbeispiel, dass eine Abweichung der Sollmenge von der Istmenge nur innerhalb von maximal 30 Sekunden auftritt, danach entspricht die Sollmenge exakt der Istmenge. Die initiale Abweichung zwischen Sollmenge und Istmenge ist für grosse Dosiermengen im Wesentlichen gleich wie für kleine Dosiermengen. Daher eignet sich das System sowie das zugehörige Verfahren sowohl für kleine als auch für sehr grosse Dosiermengen.

Daher ist das System bei stark abweichenden Dosiermengen oder Dosiermengenschwankungen zuverlässig einsetzbar.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nichtausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. System (1) zur Dosierung eines flüssigen oder gasförmigen Mediums in einen durch einen geschlossenen Kanal (11) fliessenden Fluidstrom, der einen Prozessdruck (p3) aufweist, umfassend einen Zulauf (10) für das flüssige oder gasförmige Medium, wobei der Zulauf (10) mit dem geschlossenen Kanal (11) in fluidleitender Verbindung steht, wobei im Zulauf (10) ein Druckregelventil (4) und ein Durchflusssensor (3) angeordnet sind, wobei das Druckregelventil (4) und der Durchflusssensor (3) einen geschlossenen Regelkreis (6) ausbilden, wobei mittels des Durchflusssensors (3) ein Durchflussmesswert ermittelbar ist, wobei der Durchflussmesswert als Eingangsgrösse in einen Regler (7) einspeisbar ist, wobei der Eingangsgrösse durch den Regler (7) eine Ausgangsgrösse zuordenbar ist, wobei die Ausgangsgrösse einem gewünschten Dosierdruck (p2) entspricht, wobei eine Druckdifferenz zwischen dem gewünschten Dosierdruck (p2) und dem Prozessdruck (p3) durch das Druckregelventil (4) einstellbar ist, sodass die Dosiermenge durch die Druckdifferenz zwischen dem Dosierdruck (p2) und dem Prozessdruck (p3) geregelt wird.

2. System nach Anspruch 1, wobei der Durchflusssensor (3) als Massenstromsensor ausgebildet ist.

3. System nach einem der vorhergehenden Ansprüche, wobei der Regler (7) als Massenstromregler ausgebildet ist und/oder der Durchflusssensor (3) und der Regler (7) eine Einheit bilden.

4. System nach einem der vorhergehenden Ansprüche, wobei der Durchflusssensor (3) stromaufwärts des Druckregelventils (4) im Zulauf (10) angeordnet ist.

5. System nach einem der vorhergehenden Ansprüche, wobei das Druckregelventil (4) als ein elektromagnetisches Ventil ausgebildet ist.

6. System nach einem der vorhergehenden Ansprüche, wobei die grösste Dosiermenge mindestens 50-mal grösser als die kleinste Dosiermenge ist.

7. System nach einem der vorhergehenden Ansprüche, wobei eine Pumpe oder ein Kompressor auf der Anströmseite des Druckregelventils (4) angeordnet ist, um einen Vordruck (p1) auf die Anströmseite des Druckregelventils (4) zu erzeugen.

8. System nach einem der vorhergehenden Ansprüche, wobei zwischen dem Durchflusssensor (3) und dem Druckregelventil (4) ein erstes Druckmessgerät (8) zur Messung des auf der Eingangsseite des Druckregelventils (4) anliegenden Vordrucks (p1) ausgebildet ist.

9. System nach einem der vorhergehenden Ansprüche, wobei stromabwärts des Druckregelventils (4) ein zweites Druckmessgerät (9) zur Messung des Dosierdrucks im Zulauf (10) angeordnet ist.

10. System nach einem der vorhergehenden Ansprüche, wobei zwischen dem Druckregelventil (4) und der Mündungsöffnung des Zulaufs in den geschlossenen Kanal (11) des Fluidstroms ein Vordruckregler (5) angeordnet ist.

11. System nach einem der vorhergehenden Ansprüche, wobei stromaufwärts des Durchflusssensors (3) ein Druckspeicher oder ein Druckbegrenzungsventil angeordnet ist.

12. System nach einem der vorhergehenden Ansprüche, wobei der Regler (7) als PID-Regler ausgebildet ist.

13. Verfahren zur Dosierung eines flüssigen oder gasförmigen Mediums in einen durch einen geschlossenen Kanal (11) fliessenden Fluidstrom, der einen Prozessdruck (p3) aufweist, wobei das flüssige oder gasförmige Medium mittels eines Zulaufs (10) in den geschlossenen Kanal zugeführt wird, wobei im Zulauf (10) ein Druckregelventil (4) und ein Durchflusssensor (3) angeordnet sind, wobei durch das Druckregelventil (4) und den Durchflusssensor (3) ein geschlossener Regelkreis (6) ausgebildet wird, wobei mittels des Durchflusssensors (3) ein Durchflussmesswert ermittelt wird, wobei der Durchflussmesswert als Eingangsgrösse in einen Regler (7) eingespeist wird, wobei der Eingangsgrösse durch den Regler (7) eine Ausgangsgrösse zugeordnet wird, wobei die Ausgangsgrösse einem gewünschten Dosierdruck (p2) entspricht, wobei eine Druckdifferenz zwischen (p2) dem gewünschten Dosierdruck (p2) und dem Prozessdruck (p3) durch das Druckregelventil (4) eingestellt wird, wobei die Dosiermenge durch die Druckdifferenz zwischen dem Dosierdruck (p2) und dem Prozessdruck (p3) eingestellt wird.

14. Verfahren nach Anspruch 13, wobei bei einer Änderung der Dosiermenge ein neuer Istwert für die Dosiermenge innerhalb von weniger als 60 Sekunden erhalten wird oder wobei bei einer Veränderung des Sollwerts für den Dosierdruck der Istwert der Dosiermenge nicht mehr als 30% vom Sollwert der Dosiermenge abweicht.

15. Verwendung eines Systems (1) nach einem der vorhergehenden Ansprüche 1 bis 12 zur Regelung der Dosiermenge von COz.

## Claims

1. System (1) for metering a liquid or gaseous medium into a fluid stream which flows through a closed channel (11) and has a process pressure (p3), comprising a feed line (10) for the liquid or gaseous medium, wherein the feed line (10) is in fluid-conducting connection with the closed channel (11), wherein a pressure control valve (4) and a flow sensor (3) are arranged in the feed line (10), wherein the pressure control valve (4) and the flow sensor (3) are configured as a closed loop control circuit (6), wherein a measured flow value can generated by the flow sensor (3), wherein the measured flow value can be fed to a controller (7) as an input value, wherein an output value is attributable to the input value by the controller (7), wherein the output value corresponds to a desired metering pressure (p2), wherein a pressure difference between the desired metering pressure (p2) and the process pressure (p3) is adjustable by the pressure control valve (4), such that the metering quantity is determined by the pressure difference between the metering pressure (p2) and the process pressure (p3).

2. The system of claim 1, wherein the flow sensor (3) is configured as a mass flow sensor.

3. The system of one of the preceding claims, wherein the controller (7) is configured as a mass flow controller and / or the flow sensor (3) and the controller (7) form a unit.

4. The system of one of the preceding claims, wherein the flow sensor (3) is arranged upstream of the pressure control valve (4) in the feed line (10).

5. The system of one of the preceding claims, wherein the pressure control valve (4) is configured as an electromagnetic valve.

6. The system of one of the preceding claims, wherein the dosing quantity range between the smallest and the largest metering quantity is at least 1:50.

7. The system of one of the preceding claims, wherein a pre-pressure (p1) acting on the upstream side of the pressure control valve (4) can be generated by means of a compressor (2) or a pump.

8. The system of one of the preceding claims, wherein a first pressure measuring device (8) is arranged between the flow sensor (3) and the pressure control valve (4) for measuring the pre-pressure (p1) on the input side of the pressure control valve (4).

9. The system of one of the preceding claims, wherein a second pressure measuring device (9) for measuring the metering pressure in the feed line (10) is arranged downstream of the pressure control valve (4).

10. The system of one of the preceding claims, wherein a pre-pressure controller (5) is arranged between the pressure control valve (4) and the discharge opening of the fluid flow of the feed line into the closed channel (11).

11. The system of one of the preceding claims, wherein a pressure accumulator or a pressure relief valve is arranged upstream of the flow sensor (3).

12. The system of one of the preceding claims, wherein the controller (7) is configured as a PID controller.

13. A method for metering a liquid or gaseous medium into a fluid stream flowing through a closed channel (11) wherein the fluid stream has a process pressure (p3) wherein the liquid or gaseous medium is fed into the closed channel by a feed line (10), wherein a pressure control valve (4) and a flow sensor (3) are arranged in the feed line (10), wherein the pressure control valve (4) and the flow sensor (3) are configured as a closed loop control circuit (6), wherein a measured flow value is generated by the flow sensor (3), wherein the measured flow value is fed to a controller (7) as an input value, wherein an output value is attributed to the input value by the controller (7), wherein the output value corresponds to a desired metering pressure (p2), wherein a pressure difference between the desired metering pressure (p2) and the process pressure (p3) is adjusted by the pressure control valve (4), wherein the metering quantity is determined by the pressure difference between the metering pressure (p2) and the process pressure (p3).

14. The method of claim 13, wherein a new actual value for the metering quantity is reached within less than 60 seconds when the metering quantity is changed or wherein the actual value of the metering quantity does not differ by more than 30% from the setpoint of the metering quantity when the setpoint for the metering pressure is changed.

15. Use of a system of one of the preceding claims 1 to 12 for the control of the metering quantity of COz.

## Revendications

1. Système (1) de dosage d'un liquide ou d'un gaz dans un flux de fluide qui s'écoule dans un canal fermé (11) et qui a une pression de traitement (p3), comprenant une conduite d'alimentation (10) pour le liquide ou le gaz, dans laquelle la conduite d'alimentation (10) est en liaison par conduction de fluide avec le canal fermé (11), dans lequel une vanne de régulation de pression (4) et un capteur de débit (3) sont disposés dans la conduite d'alimentation (10), dans lequel la vanne de régulation de pression (4) et le capteur de débit (3) sont configurés comme un circuit de régulation en boucle fermée (6), dans lequel une valeur de débit mesurée peut être générée par le capteur de débit (3), la valeur de débit mesurée peut être transmise à un contrôleur (7) en tant que valeur d'entrée, une valeur de sortie est attribuée à la valeur d'entrée par le contrôleur (7), la valeur de sortie correspond à une pression de dosage souhaitée (p2), en ce qu'une différence de pression entre la pression de dosage souhaitée (p2) et la pression de traitement (p3) est réglable par la vanne de régulation de pression (4), de sorte que la quantité de dosage est déterminée par la différence de pression entre la pression de dosage (p2) et la pression de traitement (p3).

2. Le système de la revendication 1, dans lequel le capteur de débit (3) est configuré comme un capteur de débit massique.

3. Le système de l'une des revendications précédentes, dans lequel le contrôleur (7) est configuré comme un contrôleur de débit massique et/ou le capteur de débit (3) et le contrôleur (7) forment une unité.

4. Le système de l'une des revendications précédentes, dans lequel le capteur de débit (3) est placé en amont de la vanne de régulation de pression (4) dans la conduite d'alimentation (10).

5. Le système de l'une des revendications précédentes, dans lequel la vanne de régulation de pression (4) est configurée comme une vanne électromagnétique.

6. Le système de l'une des revendications précédentes, dans lequel la plage de quantité de dosage entre la plus petite et la plus grande quantité de dosage est d'au moins 1:50.

7. Le système de l'une des revendications précédentes, dans lequel une pré-pression (p1) agissant sur le côté amont de la vanne de régulation de pression (4) peut être générée au moyen d'un compresseur (2) ou d'une pompe.

8. Le système de l'une des revendications précédentes, dans lequel un premier dispositif de mesure de la pression (8) est disposé entre le capteur de débit (3) et la vanne de régulation de pression (4) pour mesurer la pré-pression (p1) du côté entrée de la vanne de régulation de pression (4).

9. Le système de l'une des revendications précédentes, dans lequel un deuxième dispositif de mesure de la pression (9) pour mesurer la pression de dosage dans la conduite d'alimentation (10) est disposé en aval de la vanne de régulation de la pression (4).

10. Le système de l'une des revendications précédentes, dans lequel un contrôleur de pré-pression (5) est disposé entre la vanne de régulation de pression (4) et l'ouverture de décharge de l'écoulement de fluide de la conduite d'alimentation dans le canal fermé (11).

11. Le système de l'une des revendications précédentes, dans lequel un accumulateur de pression ou une soupape de décharge est placé en amont du capteur de débit (3).

12. Le système de l'une des revendications précédentes, dans lequel le contrôleur (7) est configuré comme un contrôleur PID.

13. Méthode de dosage d'un liquide ou d'un gaz dans un flux de fluide s'écoulant à travers un canal fermé (11) dans lequel le flux de fluide a une pression de traitement (p3) dans lequel le liquide ou le gaz est introduit dans le canal fermé par une conduite d'alimentation (10), dans lequel une vanne de régulation de pression (4) et un capteur de débit (3) sont disposés dans la conduite d'alimentation (10), dans lequel la vanne de régulation de pression (4) et le capteur de débit (3) sont configurés comme un circuit de régulation en boucle fermée (6), dans lequel une valeur de débit mesurée est générée par le capteur de débit (3), la valeur de débit mesurée est transmise à un contrôleur (7) en tant que valeur d'entrée, une valeur de sortie est attribuée à la valeur d'entrée par le contrôleur (7), la valeur de sortie correspond à une pression de dosage souhaitée (p2), en ce qu'une différence de pression entre la pression de dosage souhaitée (p2) et la pression de traitement (p3) est ajustée par la vanne de régulation de pression (4), la quantité de dosage est déterminée par la différence de pression entre la pression de dosage (p2) et la pression de traitement (p3).

14. Méthode de la revendication 13, dans laquelle une nouvelle valeur réelle de la quantité de dosage est atteinte en moins de 60 secondes lorsque la quantité de dosage est modifiée ou dans laquelle la valeur réelle de la quantité de dosage ne diffère pas de plus de 30 % de la valeur de consigne de la quantité de dosage lorsque la valeur de consigne de la pression de dosage est modifiée.

15. Utilisation d'un système de l'une des revendications précédentes 1 à 12 pour le contrôle de la quantité de CO₂ dosée.
